# EUROPÄISCHE PATENTSCHRIFT

(11) **EP 1 287 328 B1**
(45) Veröffentlichungstag und Bekanntmachung des Hinweises auf die Patenterteilung: **24.01.2007**
(21) Anmeldenummer: 01964958.1
(22) Anmeldetag: 05.06.2001
(51) Int. Cl.: G01N 1/31, B01J 19/00, B01L 7/00

(54) **VORRICHTUNG UND VERFAHREN ZUR BEARBEITUNG VON SUBSTRATGEBUNDENEN PROBEN**
DEVICE AND METHOD FOR THE TREATMENT OF SUBSTRATE-BOUND PROBES
DISPOSITIF ET PROCEDE DE TRAITEMENT DE PRELEVEMENTS LIES A UN SUBSTRAT

(30) Priorität: 02.06.2000 DE 10027524
(43) Veröffentlichungstag der Anmeldung: 05.03.2003
(73) Patentinhaber: Max-Planck-Gesellschaft zur Förderung der Wissenschaften e.V., 80539 München (DE)
(72) Erfinder: NY RSIK, Lajos, 10369 Berlin (DE); ROHLFS, Elke, 12059 Berlin (DE); EICKHOFF, Holger, 27211 Bassum (DE); LEHRACH, Hans, 14129 Berlin (DE)
(74) Vertreter: Hertz, Oliver
(86) Internationale Anmeldenummer: PCT/EP2001/006379
(87) Internationale Veröffentlichungsnummer: WO 2001/092849

(56) Entgegenhaltungen:
- EP-A- 0 508 568
- WO-A-00/05336
- WO-A-93/09668
- WO-A-97/35176
- WO-A-99/00655
- WO-A-99/42813
- US-A- 5 945 334
- US-A- 5 958 760

## Beschreibung

Die Erfindung betrifft eine Vorrichtung zur Bearbeitung substratgebundener Proben in einer Fluidkammer, insbesondere eine Hybridisierungsvorrichtung zum Prozessieren einer Vielzahl von an ein Substrat gebundenen Proben, und Verfahren zur Probenbearbeitung unter Verwendung einer derartigen Vorrichtung.

Die Verarbeitung substratgebundener Proben ist in der Biologie, Gentechnik und Biochemie allgemein bekannt. Es besteht beispielsweise ein Interesse an der Hybridisierung von Mikroarrays von Genproben oder an der biologischen und chemischen Prozessierung von Proben, die auf einem planaren Substrat angebracht sind. Im Ergebnis sind die Proben je nach der durchgeführten Reaktion verändert. Die Veränderung wird beispielsweise durch eine Fluoreszenz-, Absorptions- oder Oberflächenplasmonenresonanzmessung erfasst. Das jeweilige Meßergebnis dient als Maßstab für die Beurteilung der abgelaufenen Reaktion oder für die Identifikation von Reaktionspartnern.

Die jeweiligen Reaktionen werden in Kammern durchgeführt, wobei typischerweise das Substrat mit den Proben eine der Kammerwände bildet. Es sind vorkonfektionierte Probenkammern mit sogenannten Biochips verfügbar. Biochips sind Substrate, auf denen spezifische Test- oder Markierungsproben angeordnet sind. Bei Anwendung wird eine Probenkammer an einem Fluid-anschluss geöffnet, eine zu untersuchende Lösung eingelassen und mit den Proben zur Reaktion gebracht, und anschließend wird der Biochip vermessen. Herkömmliche Biochips sind typischerweise an substanzspezifische Analyseaufgaben angepasst. Durch Einsatz in geschlossenen Kammern ist es nicht möglich, dass der Anwender Veränderungen an den Testsubstanzen oder dgl. vornimmt. Ein weiterer Nachteil der herkömmlichen Probenkammern besteht in deren relativ großen Kammervolumina. Es entsteht ein großer Lösungsmittelverbrauch.

Es ist auch bekannt, Hybridisierungsreaktionen manuell mit Hybridisierungskammern aus Glas oder Kunststoff durchzuführen. Diese Kammern sind speziell für die Durchführung der eigentlichen Hybridisierung ausgelegt. Weitere Reaktionsabläufe (Prähybridisierung, Waschschritte, usw.) werden gesondert durchgeführt. Die Anwendung dieser Kammern ist auf Laboratoriumsexperimente beschränkt. Die Hybridisierungslösungen, die die zu charakterisierenden Proben enthalten, werden direkt auf eine Substratoberfläche pipettiert und mit einem Deckglas abgedeckt. Die Flüssigkeitsdosierung kann nur manuell durchgeführt werden. Weitere Nachteile dieser Hybridisierungskammern bestehen in der Gefahr, die Arrayoberflächen mit dem Deckglas zu beschädigen, und in den Lösungsmittelverlusten durch Ver-dampfung von den Substratoberflächen. Ein Einsatz in automatisierten Anlagen ist ausgeschlossen.

Es sind auch Hybridisierungskammern bekannt, bei denen der Reaktionsraum durch zwei Probenarrays aus Glassubstraten und eine gemeinsame Rahmenhalterung gebildet wird. Diese Kammern eigenen sich insbesondere für Probenprozessierungen im Durchflussbetrieb. Der Aufbau einer Kammer aus zwei Glassubstraten und einer Rahmenanordnung besitzt zwar den Vorteil einer hohen Probenausbeute, muss aber auch manuell zusammengesetzt werden. Eine Anwendung in automatisierten Anlagen wird dadurch erschwert.

Aus der Laborchemie sind auch Reaktionskammern auf der Basis von PE-Beuteln oder Reaktionszylindern bekannt. Diese erfordern jedoch große Lösungsmittelvolumina. Anwendungsmöglichkeiten, insbesondere in der Biochemie und Gentechnik sind nur eingeschränkt gegeben, da in diesen Gebieten ein Interesse an hohen lokalen Probenkonzentrationen besteht. Bei großen Kammervolumina würde sich ein hoher Substanzverbrauch ergeben, um die gewünschten Probenkonzentrationen zu erzielen.

Weitere Kammern zum Prozessieren flüssiger Proben sind aus US 5,945,934, WO 97/35176, EP 508568, WO 99/42813 und US 5, 958, 760 bekannt.

WO9735176 offenbart eine Biochipverpackung mit einer Kammer in einem Trägerkörper, die einen Einlaß und einen Auslaß in diagonal gegenüberliegenden Ecken aufweist. Auf den Trägerkörper wird einen Biochip durch Verklebung oder mittels einer Klemmeinrichtung über Ausrichtungsstifte montiert. Gemäß einer Ausführungsform ist der Chip über der Kammer auf deren umlaufenden Rand mittels einer umlaufenden Dichtung aufgelegt. Mittels eines Rahmens wird der Biochip durch Verkleben oder mittels einer Klemmanordnung an den Trägerkörper befestigt.

EP0508568 offenbart einen Biosensor, der ein Durchflußkammer- Oberteil bzw. Unterteil und eine dazwischenliegende Wellenleiterplatte aufweist, die mittels Ausrichtungsstiften miteinander verbunden werden. Das Oberteil ist plattenförmig ausgebaut mit einer Vielzahl von Kammern, die über entsprechende Einlaß- bzw. Auslaßöffnungen mit Einlaß- bzw. Auslaßkanälen in Verbindung stehen und entsprechende umlaufende Ränder aufweisen. Diese bilden eine Vertiefung für eine Abdichtung, die keinen nennenswerten Wandteil der Kammer darstellt. Nach der Zusammenstellung bildet die Oberfläche der Wellenleiterplatte (auf der Hybridisierungsmolekülen immobilisiert sind) eine Decke für die Kammer. Durchflußkammerunterteil ist plattenförmig gestaltet mit drei Öffnungen, deren Umlaufränder einen Klemmrahmen mit einer der äußeren Form der Kammer entsprechenden Andruckfläche darstellt.

Die Aufgabe der Erfindung ist es, eine verbesserte Vorrichtung zum Prozessieren von Fluidproben bzw. substratgebundenen Proben anzugeben, mit der insbesondere die Genauigkeit und Sicherheit des Reaktionsablaufs erhöht und eine Automatisierung ermöglicht wird. Die Vorrichtung soll insbesondere zur automatisierten, hochgenauen Durchführung von Hybridisierungsreaktionen ohne manuelle Interaktionen geeignet sein. Es sollen auch Verbesserungen hinsichtlich der Genauigkeit der Prozessparameter, insbesondere der Dosierung, der Temperaturregelung und des Prozessablaufs, erzielt werden. Die Aufgabe der Erfindung ist es auch, verbesserte Verfahren zur Prozessierung von Proben mit kleinsten Probenvolumina und zur Anwendung der genannten Vorrichtung anzugeben.

Diese Aufgaben werden durch Vorrichtungen und Verfahren mit den Merkmalen gemäß den Patentansprüchen 1 bzw. 13 gelöst. Vorteilhafte Ausführungsformen und Anwendungen der Erfindung ergeben sich aus den abhängigen Ansprüchen.

Eine erfindungsgemäße Vorrichtung zum Prozessieren von fluidischen Proben umfasst insbesondere eine Fluidkammer mit Fluidanschlüssen, die einseitig offen in einem Trägerkörper angeordnet ist, und eine Feststelleinrichtung mit einem relativ zum Trägerkörper verschiebbaren Klemmrahmen, mit dem die Fluidkammer verschließbar ist. Dieser Aufbau ermöglicht einerseits den vollen Zugriff auf die Fluidkammer vor oder nach der jeweiligen Reaktion, selbst wenn diese für kleinste Probenvolumen ausgelegt ist, eine einfache Anpassung an beliebige gelöste, suspendierte oder substratgebundene Probentypen und eine Automatisierung von Prozessabläufen.

Gemäß einer bevorzugten Ausführungsform der Erfindung ist die genannte Vorrichtung zur Prozessierung von substratgebundenen Proben ausgelegt. Ein Substrat mit den Proben (z. B. DNA- oder Proteinarrays) wird zum Verschließen der Fluidkammer verwendet. Das Substrat-ist vorzugsweise ein ebenes Substrat aus einem festen Material. Die Fluidkammer umfasst einen Boden und einen von diesem hervorragenden, umlaufenden Rand, der eine Auflage für das Substrat bildet. Mit dem Klemmrahmen der Feststelleinrichtung wird das Substrat gegen den Rand gepresst, so dass die Fluidkammer verschlossen wird. Vorteilhafterweise besitzt der umlaufende Rand eine Doppelfunktion. Erstens dient er als Abstandshalter, mit dem der senkrechte Abstand des Substrates vom Boden der Fluidkammer und damit das Kammervolumen eingestellt wird. Zweiten besitzt er eine Dichtungsfunktion. Das Substrat verschließt die Fluidkammer durch das Aufliegen des Substrates auf dem Rand erfolgt ein flüssigkeitsdichter Verschluss. Zur Verbesserung der Flüssigkeitsabdichtung können erfindungsgemäß eine oder mehrere der folgenden Maßnahmen vorgesehen sein. Der Rand kann aus einem elastischen Dichtmaterial hergestellt sein. Die vom Rand gebildete Auflage kann eine geglättete oder polierte Oberfläche besitzen. Zusätzlich können der Trägerkörper und/oder die Feststelleinrichtung mit Dichtungen versehen sein. Eine der Dichtungen ist am Trägerkörper vorgesehen und verläuft als Dichtungsstreifen parallel zu der Ebene, die durch den Rand mit der Auflage für das Substrat gebildet wird. Diese Dichtung dient simultan der Positionierung des Substrats auf dem Rand. Die am Trägerkörper vorgesehene Dichtung verläuft in einer Nut, die im Trägerkörper um den Rand oder in der Auflagefläche des umlaufenden Randes gebildet ist.

Gemäß der Erfindung umfasst die Feststelleinrichtung eine Wippenanordnung, mit denen eine im Wesentlichen senkrechte Verschiebung des Klemmrahmens hin zu dem umlaufenden Rand der Fluidkammer gewährleitstet wird. Das Verschließen der Fluidkammer erfolgt bspw. mit dem genannten Substrat, das mit dem Klemmrahmen auf den umlaufenden Rand gedrückt wird. Die Feststelleinrichtung gewährleitstet vorteilhafterweise ein gleichmäßiges senkrechtes Andrücken über den gesamten Randverlauf. Die Fluidkammer wird spannungsfrei verschlossen. Substratbeschädigungen werden vermieden. Des Weiteren erlaubt die erfindungsgemäß verwendete Feststelleinrichtung ein schnelles Verschließen der Fluidkammer. Beide Vorteile sind für die Verwendung der Fluidkammer in automatisierten Prozessen von Vorteil.

Alternativ kann die erfindungsgemäße Vorrichtung aber auch zum Prozessieren ausschließlich gelöster oder suspendierter Proben ausgelegt sein. Bei dieser Ausführungsform ist am Klemmrahmen eine Platte angebracht, die wie das genannte Substrat mit der Randauflage der Fluidkammer zusammenwirkt.

Gemäß einer weiteren bevorzugten Ausführungsform der Erfindung ist die Feststelleinrichtung bzw. der Klemmrahmen so aufgebaut, dass das Innere der Fluidkammer im geschlossenen Zustand Messvorgängen zugänglich ist. Die Feststelleinrichtung und/oder der Klemmrahmen besitzen eine durchgehende Öffnung oder Ausnehmung, durch die am Substrat mit den gebundenen Proben bzw. in der Fluidkammer optische Messungen durchführbar sind. Die optischen Messungen können bspw. Fluoreszenzmessungen umfassen. Zur simultanen Auswertung verschiedener Fluoreszenzmaxima kann das Substrat oder die Platte, mit der die Fluidkammer verschlossen wird, auf der Außenseite mit einer Beschichtung versehen sein, die eine Bandpasscharakteristik, z. B. Doppelbandpasscharakteristik besitzt. Damit wird die spektrale Auswertung der Fluoreszenz der einzelnen Proben vorteilhafterweise vereinfacht.

Gegenstand der Erfindung ist auch ein Verfahren zur Probenprozessierung mit der erfindungsgemäßen Vorrichtung. Das Verfahren zeichnet sich insbesondere durch ein Verschließen der Fluidkammer mit einem Substrat mit den gebundenen Proben (bzw. mit einer Platte) und ein anschließendes Beschicken der Fluidkammer mit Reaktionspartnern durch Fluidleitungen im Trägerkörper aus. Von besonderem Vorteil ist, dass sowohl das Verschließen der Kammer als auch die Beschickung vollständig automatisierbar sind.

Die Erfindung besitzt die folgenden Vorteile. Mit der erfindungsgemäßen Vorrichtung sind Proben in Mikrovolumen von Flüssigkeiten vollautomatisch handhabbar und prozessierbar. Die Fluidkammer kann schnell und sicher verschlossen werden. Die Verarbeitung kann mit einem hohen Durchsatz bei paralleler Probenbearbeitung (Mikroarrays) durchgeführt werden. Es ergeben sich breite Anwendungen in der Biologie, Genetik, Chemie und Medizin bis hin zur Behandlung oder Modifikation von Oberflächen. Die Prozessführung ist präzise und reproduzierbar ohne manuelle Interaktionen möglich. Dies ist insbesondere für Hybridisierungsverfahren von Vorteil. Als besonderer Vorzug der erfindungsgemäßen Fluidkammer hat sich erwiesen, dass durch Einstellung einer Höhe eines umlaufenden Randes der Fluidkammer, insbesondere von weniger als 1 mm, extrem geringe Kammervolumina hochgenau eingestellt werden können. Geringste Volumina biologischer Proben können mit hohen Konzentrationen angewendet werden.

Die erfindungsgemäße Vorrichtung ermöglicht während der Probenprozessierung eine Detektion der Proben bzw. Reaktionspartner direkt in der Kammer. Es sind Prozessabläufe integrierbar, in denen verschiedene Reaktionen gestartet werden, ohne dass die Fluidkammer geöffnet werden muss. Bei mehrfacher Hybridisierung von Mikroarrays kann auch das Stripping von Proben in der Fluidkammer durchgeführt werden. Es ergeben sich zahlreiche Anwendungen bei der Expressionsanalyse an DNA-Arrays, bei Mutationsdetektionen (SNPs) und DNA-Sequenzierreaktionen (Sequencing by Hybridisation, SBH).

Überraschenderweise konnte eine gute Dichtheit der Fluidkammer festgestellt werden, selbst wenn lediglich das Substrat auf den metallischen Rand der Fluidkammer aufgeklemmt wird. Es konnte bspw. die Aufrechterhaltung eines Unterdruckes in der Fluidkammer über 24 Stunden hinweg festgestellt werden.

Weitere Vorteile und Einzelheiten der Erfindung werden aus der Beschreibung der beigefügten Zeichnungen ersichtlich. Es zeigen:
- Figur 1: eine schematische Perspektivansicht wichtiger Komponenten einer erfindungsgemäßen Vorrichtung zur Probenprozessierung,
- Figur 2: eine schematische Schnittansicht einer bevorzugten Ausführungsform der erfindungsgemäßen Vorrichtung, und
- Figur 3: eine schematische Draufsicht einer weiteren Ausführungsform der erfindungsgemäßen Vorrichtung (Teilansicht).

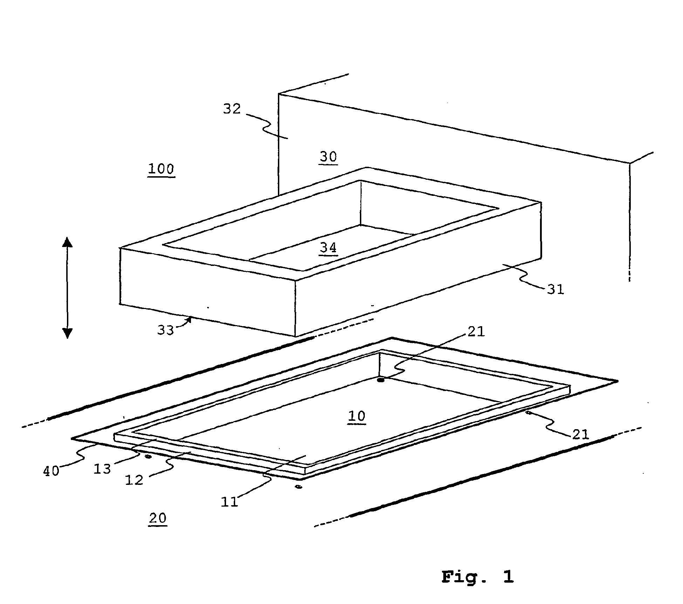

Die Illustrationen erfindungsgemäßer Vorrichtungen in den Figuren sind nicht maßstabsgerecht. Aus Klarheitsgründen sind bestimmte Bauteile, insbesondere der Rand zur Bildung der seitlichen Wand der Fluidkammer und die Fluidanschlüsse und -kanülen im Trägerkörper relativ vergrößert eingezeichnet. Eine erfindungsgemäße Vorrichtung 100 zur Prozessierung von Proben umfasst gemäß Figur 1 eine Fluidkammer 10, einen Trägerkörper 20 und eine Feststelleinrichtung 30. Das Zusammenwirken dieser Komponenten wird im folgenden erläutert.

Die Fluidkammer 10 bildet ein Mikrogefäß, dessen Wände aus mindestens einem harten, festen Material wie einem Metall, z. B. Edelstahl, einem harten Kunststoff oder Keramik besteht. Das Mikrogefäß besitzt einen Boden 11 mit einem umlaufenden Rand 12.

Der Boden 11 ist vorzugsweise eben mit einem rechteckigen Querschnitt. Der Rand 12 bildet einen aus der Ebene des Bodens 10 hervorragenden Vorsprung, der an seiner umlaufenden, freien Kante eine Auflage 13 bildet. Die Auflage 13 liegt vorzugsweise in einer zum Boden 10 parallelen Bezugsebene. Durch die Fläche des Bodens 11 und die Innenhöhe des Randes 12 wird das Volumen der Fluidkammer 10 festgelegt. Der Rand besteht vorzugsweise aus Glas, Kunststoff, Metall oder einem Dichtmaterial (z. B. Gummi).

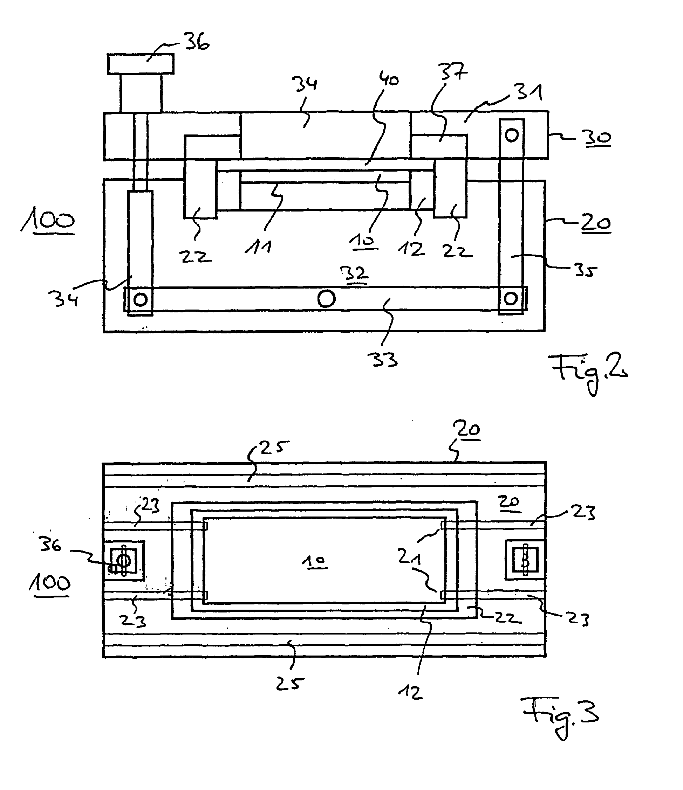

Die Fluidkammer 10 ist teilweise in einen Trägerkörper 20 eingelassen, dessen Einzelheiten unter Bezug auf die Figuren 2 und 3 erläutert werden. Im Trägerkörper 20 verlaufen Fluidleitungen (nicht dargestellt), die über Fluidanschlüsse 21 mit dem Inneren der Fluidkammer 10 in Verbindung stehen. Die Zahl der Fluidleitungen bzw. -anschlüsse wird anwendungsabhängig gewählt. Es ist mindestens ein Fluidanschluß vorgesehen. Für Durchflussanwendungen werden mindestens zwei Fluidanschlüsse (z. B. vier, siehe unten) bevorzugt. Die Fluidanschlüsse sind vorteilhafterweise im Boden der Fluidkammer 10 vorgesehen. Durch eine symmetrische Anordnung nahe den Ecken wird eine gleichmäßige Beschickung der Fluidkammer bzw. eine gleichmäßige Flüssigkeitsabfuhr gewährleistet. Die Anordnung der Fluidanschlüsse am Rand des Bodens, insbesondere an den Ecken, ermöglicht ferner eine blasenfreie Beschickung der Fluidkammer. Abweichend von der schematischen Darstellung in Figur 1 können die Fluidanschlüsse 21 auch am Rand 12 der Fluidkammer ausgebildet sein, falls dieser eine ausreichende Randhöhe besitzt.

Die Feststelleinrichtung 30 umfasst einen Klemmrahmen 31 und einen Schließmechanismus 32 (schematisch dargestellt). Der Klemmrahmen 31 ist mit dem Schließmechanismus relativ zum Trägerkörper 20 beweglich. Der Klemmrahmen 31 bildet eine Andruckfläche 33, deren Form mit der Form des umlaufenden Randes 12 übereinstimmt oder diesen überdeckt. Die Andruckfläche 33 ist für ein gleichmäßiges Anpressen des Substrats (bzw. der Platte) 40 auf den Rand 12 ausgelegt und bildet vorzugsweise ebenfalls eine umlaufende Fläche mit den gleichen Dimensionen wie der Rand 12. Für ein spannungsfreies gleichmäßiges Andrücken des Substrats 40 kann die Andruckfläche 33 aber auch aus einer Vielzahl stempelartiger Vorsprünge bestehen, die entsprechend der Form des Randes 12 angeordnet sind. Der Klemmrahmen 31 besitzt in seiner Mitte ein Beobachtungsfenster 34, das für optische Messungen in der Fluidkammer 10 ausgelegt ist. Der Schließmechanismus 32 enthält einen Antrieb zur Bewegung des Klemmrahmens 31 hin zur Fluidkammer 10, zum Festklemmen des Substrats 40 bzw. zur Freigabe des Substrats 40 durch eine Rückwärtsbewegung (siehe Doppelpfeil). Der Antrieb kann eine Geradeführungseinheit oder auch der in den Figuren 2 und 3 illustrierte Wippenantrieb sein.

Im Unterschied zu herkömmlichen Reaktionskammern für flüssige Proben bildet erfindungsgemäß das Substrat oder die Platte und nicht der Klemmrahmen die Abdeckung oder den Verschluss der Fluidkammer. Der Trägerkörper 20 einerseits und der Klemmrahmen 31 andererseits sind durch das Substrat (oder die Platte 40) voneinander getrennt.

Das Substrat 40 ist je nach Ausführungsform ein Probenträger für substratgebundene Proben (z. B. Mikroarrays), eine Platte, die als Teil des Klemmrahmens 31 ausschließlich zum Verschließen der Fluidkammer 10 ausgelegt ist, oder ein plattenförmiges Probenstück, dessen zum Inneren der Fluidkammer 10 hinweisende Oberfläche durch eine in der Fluidkammer 10 ablaufende Reaktion beeinflusst (z. B. mit bestimmten Substanzen funktionalisiert, beladen oder bearbeitet) werden soll. Das Substrat 40 besteht vorzugsweise aus einem transparenten Material (z. B. Glas, Kunststoff), das gegebenenfalls mit zusätzlichen Einrichtungen für die optische Messung, wie z. B. Justiermarkierungen, Referenzschichten, Metallschichten für Oberflächenplasmonenreferenzmessungen und dergleichen ausgebildet ist.

Die Fluidkammer 10 kann als selbständige Komponente im Trägerkörper 20 eingesetzt oder modulartig aufgebaut sein. Im letzteren Fall ist der Boden 11 Teil des Trägerkörpers 20. Die Oberfläche des Bodens 11 ist durch Polieren, Läppen oder Feinschliff geglättet. Der Rand 12 wird als Rahmenteil gesondert fein bearbeitet und auf den Boden 11 (oder in einer Nut, die den Boden allseits begrenzt) aufgesetzt, so dass durch den Boden 11 und den Rand 12 das Mikrogefäß gebildet wird, das zusammen mit dem Substrat 40 (z. B. Mikroarray) die Mikrokammer bildet, in der der jeweilige Prozess abläuft.

Figur 1 zeigt den Trägerkörper als feste Komponente, die sich beispielsweise auf einem Labortisch befindet. Der Klemmrahmen 31 ist relativ zum Trägerkörper 20 beweglich. Die Erfindung kann auch in umgekehrter Anordnung realisiert werden, indem ein Bauteil wie der Klemmrahmen ortsfest und ein Bauteil mit der Fluidkammer relativ zum Klemmrahmen beweglich angeordnet sind. Insbesondere bei der umgekehrten (inversen) Anordnung wird der Deckel der Fluidkammer (entspricht dem Boden bei der Anordnung gemäß Figur 1) vorzugsweise zumindest teilweise aus Glas hergestellt, um den direkten visuellen Zugang zum Inneren der Fluidkammer zu ermöglichen. Bei dieser Anordnung liegt das Substrat auf dem Trägerkörper, der gegebenenfalls temperiert ist (siehe unten).

Der inverse Aufbau kann besonders effektiv mit Probenbeschickungsanlagen (z. B. Spotting-Robotern) kombiniert werden. Es kann eine Vielzahl von erfindungsgemäßen Vorrichtungen mit inversem Aufbau in einer Probenbeschickungsanlage mit freiliegenden Substraten angeordnet werden. Nach der Probenbeschickung können die Fluidkammern automatisch verschlossen und die jeweiligen Reaktionsabläufe durchgeführt werden.

Die Dimensionen der Fluidkammer und des Klemmrahmens werden anwendungsabhängig an die jeweilige Aufgabe, insbesondere an den jeweiligen Mikroarraytyp, angepasst. Die Auflage 13 des Randes 12 entspricht vorzugsweise dem äußeren Umfang des jeweils verwendeten Substrats, z. B. eines standardisierten Objektträgers oder eines Deckglases, das die Proben trägt.

Zur Durchführung einer chemischen Reaktion zwischen substratgebundenen Proben und einer Testlösung wird zunächst das Substrat mit den Proben beschickt (Herstellung des Mikroarrays). Der Mikroarray wird mit den Proben entsprechend der Innenseite der Fluidkammer auf deren Rand gelegt und entsprechend der Auflage ausgerichtet. Mit dem Klemmrahmen wird das Substrat gegen den Rand der Fluidkammer gedrückt. Die hochebene Fläche des Randes im Kontakt mit der ebenen Substratfläche gewährleistet eine ausreichende Abdichtung der Kammer. Zusätzliche Dichtungen können vorgesehen sein (siehe unten). Für eine optimale Abdichtung wird ein gleichmäßiges Andrücken des Substrats entlang des gesamten Randes bevorzugt. Durch das gleichmäßige Andrücken werden Spannungen (Bruchgefahr) oder Leckerscheinungen (Undichtheit), die die Funktionalität der Kammer einschränken könnten, vermieden.

Wenn der Rand aus einem elastischen Material (z. B. Silikonkautschuk) besteht, können auch anwendungsabhängig nicht-planare Substrate verwendet werden. Nicht-planare Substrate werden allerdings lediglich bei Anwendungen in Betracht zu ziehen sein, bei denen die Einstellung eines möglichst geringen Kammervolumens unkritisch ist.

Die Feststelleinrichtung mit dem Klemmrahmen ermöglicht eine schnelle und spannungsfreie Abschließung der Kammer. Sobald das Substrat festgeklemmt ist, erfolgt eine Beschickung der Fluidkammer über die Fluidanschlüsse. Die Fluidanschlüsse sind mit einer oder mehreren Ein- oder Ausflusskanülen verbunden, die zum Befüllen bzw. Entleeren der Fluidkammer mit Flüssigkeit dienen. Durch die Fluidanschlüsse kann laufend ein Flüssigkeitstransport stattfinden, was insbesondere bei der Durchführung mehrerer Inkubationsschritte erforderlich ist. Zur Steuerung des Flüssigkeitstransports sind die Fluidanschlüsse mit einer Dosieranlage verbunden, die Flüssigkeitsreservoire, Pumpen, Ventile und dergleichen zur Präzisionsdosierung umfasst. Mit der Dosieranlage kann der Flüssigkeitstransport manuell oder automatisch erfolgen. Die Dosieranlage oder Teile von dieser können auch im Trägerkörper 20 integriert sein. Es können auch Fluidkreisläufe vorgesehen sein, mit denen Reaktionspartner wiederholt in die Fluidkammer eingeführt werden. Falls sich bei der Beschickung eine unerwünschte Gasblase gebildet hat, so kann diese durch mehrfaches Beaufschlagen der Fluidkammer mit einem Fluiddruck abwechselnder Richtung beseitigt werden. Es kann auch vorgesehen sein, dass in der Fluidkammer eine Vermischung verschiedener Reaktionspartner erfolgt, die über verschiedene Fluidanschlüsse zugeführt werden. Zur Vermischung ist bspw. eine Beschickung mit gegenläufigen Pumprichtungen oder ein zirkuläres Pumpen vorgesehen. Alternativ kann die erfindungsgemäße Fluidkammer aber auch mit einer Rühreinrichtung ausgestattet sein. Die Rühreinrichtung umfasst Rührelemente aus einem magnetischen Material, z. B. Beads oder Nadeln) in der Fluidkammer und einen magnetischen Antrieb außerhalb der Fluidkammer, z. B. im Trägerkörper oder am Feststellrahmen. Der Trägerkörper und der Feststellrahmen sind dann aus einem nicht-magnetischen Material hergestellt.

Nach Durchführung des gewünschten Reaktionsablaufes erfolgt eine optische Messung des Reaktionsergebnisses an den substratgebundenen Proben. Beispielsweise ist eine Fluoreszenzmessung durch das Beobachtungsfenster des Klemmrahmens hindurch vorgesehen. Alternativ kann auch die Fluidkammer geleert, der Klemmrahmen zurückgezogen, so dass das Substrat freigegeben und das Substrat zu einer Messstation übertragen wird.

Die Figuren 2 und 3 illustrieren weitere Ausführungsformen der Erfindung in Schnitt- bzw. Draufsicht. Die Fluidkammer 10 mit dem Boden 11 und dem umlaufenden Rand 12 ist in den Trägerkörper 20 eingelassen. Der Rand 12 bildet die Auflage 13 für das Substrat 40.

Die Feststelleinrichtung 30 mit dem Klemmrahmen 31 ist über den Schließmechanismus 32 mit dem Trägerkörper 20 verbunden. Der Schließmechanismus 32 wird durch eine Wippenanordnung gebildet, mit der der Klemmrahmen 31 relativ zum Trägerkörper 20 verschiebbar und verschwenkbar ist.

Die Wippenanordnung 32 umfasst eine Wippe 33 und zwei seitliche Verbindungselemente 34, 35, die in den Trägerkörper 20 integriert sind. Die Wippe 33 ist in der Mitte des Trägerkörpers 20 auf einer Achse verschwenkbar gelagert. Die Achse verläuft unterhalb des Bodens der Fluidkammer parallel zu einer Bezugsebene, die durch den Boden aufgespannt wird. Die Verbindungselemente 34, 35 sind ebenfalls verschwenkbar an den Enden der Wippe 33 angebracht und mit den Enden des Klemmrahmens 31 verbunden. Am ersten Verbindungselement 34 ist eine Schraubverbindung (Feststellschraube 36) vorgesehen. Auf der gegenüberliegenden Seite ist das zweite Verbindungselement 35 lediglich über die Schwenkverbindung mit dem Klemmrahmen 31 verbunden. Der Klemmrahmen 31 wird durch die seitlichen Verbindungselemente 34, 35 an jedem Ende gegen einen Punkt in Richtung zu dem Substrat 40 gezogen. Durch die Ein-Punkt-Aufhängung der Wippe 33 werden die Kräfte in der Querrichtung ausgeglichen. Wenn die Feststellschraube 36 festgezogen wird, wirken die Kräfte am Klemmrahmen immer in Richtung auf die Schwenkachse der Wippe 33 und das Substrat 40 wird ausschließlich vertikal auf den Rand 12 gedrückt. Mit der Feststellschraube 36 kann der Klemmrahmen 31 einseitig geöffnet und geschlossen werden. Außerdem ist es möglich, den Abstand zwischen dem Klemmrahmen 31 und der Wippe 33 zu verringern, so dass auf das Substrat 40 ein gleichmäßig verteilter Druck ausgeübt wird. Es ist von besonderem Vorteil, dass der Schließmechanismus 32 autonom ohne zusätzliche Einstellungen arbeitet. Die Fluidkammer kann schnell und sicher geschlossen werden.

Anstelle der Feststellschraube 36 können auch andere Spanneinrichtungen wie Feder- oder Schnellspanner oder federgetriebene Schnapper vorgesehen sein.

Figur 2 zeigt zusätzliche Abdichtungseinrichtungen, die am Trägerkörper 20 und am Klemmrahmen 31 vorgesehen sind. Die Dichtung 22 im Trägerkörper ist um die Fluidkammer 10 herum entlang des Randes 12 angeordnet. Die Auflage 13 wird von der Dichtung 22 um eine Höhe überragt, die der Dicke des Substrats 40 entspricht. Die Dichtung bildet einen Rahmen bzw. einen Anschlag, in den das Substrat 40 genau einlegbar ist. Die Dichtung 37 ist entsprechend im Klemmrahmen 31 um das Beobachtungsfenster 34 herum vorgesehen. Die Dichtung 37 besitzt eine Breite derart, dass im zusammengesetzten Zustand die Dichtung 22 und das Substrat 40 zumindest teilweise berührt werden. Die Dichtungen 22 und 37 bestehen aus einem möglichst inerten, elastischen Dichtungsmaterial, z. B. Gummi.

Figur 3 ist eine Draufsicht auf einen Trägerkörper 20 mit der Fluidkammer 10 und illustriert in Phantomansicht die durch den Trägerkörper 20 führenden Fluidkanülen 23, über die die Fluidanschlüsse 22 mit einer (nicht dargestellten) Dosieranlage verbunden sind. Außerdem sind Heizleitungen 25 gezeigt, die durch Schlauchverbindungen einer (nicht dargestellten) Temperierungseinrichtung verbunden sind. Im Trägerkörper 20 kann zusätzlich auch unmittelbar unter der Fluidkammer 10 eine zusätzliche elektrische Temperierungseinrichtung (Heiz- oder Kühleinrichtung, Peltierelement) vorgesehen sein. Dies erlaubt insbesondere ein schnelles Abfahren von bestimmten Reaktionsprogrammen mit wechselweisen Temperatursteigerungen und -absenkungen.

Die Fluidkanülen 23 besitzen im Wesentlichen den gleichen Durchmesser wie die Fluidanschlüsse 21 (z. B. < 1 mm). Zur Herstellung der Fluidkanülen wird der aus einem einstückigen Bauteil gearbeitete Trägerkörper durchbohrt. In die Bohrungen werden zur Einstellung der kleinen Leitungsdurchmesser jeweils Kapillaren eingepasst, die die Fluidkanülen bilden.

Wenn Vorrichtungen gemäß den Figuren 2 oder 3 als Mikrohybridisierungskammer aufgebaut ist, so werden vorzugsweise die folgenden Dimensionen verwirklicht. Als Substrat 40 wird ein standardisierter Objektträger, wie er an sich aus der Mikroskopie bekannt ist, verwendet. Die Außenmaße des Objektträgers betragen 76 mm · 26 mm · 1 mm. Die Außenkontur des Randes 12 entspricht der Größe des Objektträgers. Die Breite der Auflagefläche 13 beträgt ca. 2 mm. Entsprechend beträgt die Bodenfläche bzw. die freibleibende Fläche des Substrats 40 72 mm 22 mm = 1584 mm². Die Fluidanschlüsse besitzen einen Durchmesser im Bereich von 0.5 bis 1 mm. Die Erhöhung des Randes 12 über den Boden 11 beträgt 0.1 mm, so dass sich ein Kammervolumen von 158.4 mm³ (158.4 µl) ergibt. Es werden vorzugsweise Randhöhen im Bereich von 0.05 mm bis 1 mm verwendet. Es können aber auch kleinere oder größere Höhen vorgesehen sein.

Gegenstand der Erfindung ist auch ein Fluidkammersystem, das aus einer Mehrzahl der oben beschriebenen Vorrichtungen besteht. Beispielsweise können mehrere Fluidkammern in einer Reihe oder auch matrixartig in Reihen und Spalten angeordnet werden. Dies ist von besonderem Vorteil, wenn große Probenmengen hochparallel unter möglichst gleichen Reaktionsbedingungen bearbeitet werden sollen. Bei der gruppenweisen Verbindung erfindungsgemäßer Vorrichtungen erfolgt vorzugsweise eine kombinierte Verbindung mit der Dosieranlage und der Temperierungseinrichtung. Es wird bspw. eine Matrix aus 96 Fluidkammern aufgebaut.

## Patentansprüche

1. Vorrichtung (100) zum Prozessieren von substratgebundenen, gelösten und/oder suspendierten Proben, mit einem Trägerkörper und mit
- einer Fluidkammer (10), die Fluidanschlüsse (21) zum Anschluss an eine Dosiereinrichtung einen Boden (11) und einen umlaufenden Rand (12) aufweist, der eine Auflage für ein Substrat (40) bildet, und in einem Trägerkörper (20) mit Fluidleitungen (23) in Verbindung mit den Fluidanschlüssen (21) angeordnet ist, und
- einer relativ zum Trägerkörper (20) beweglichen Feststelleinrichtung (30) mit einem Klemmrahmen (31), der eine Andruckfläche (33) mit einer äußeren Form entsprechend der Gestalt des umlaufenden Randes (12) bildet, und mit einem Schließmechanismus (32), mit dem der Klemmrahmen (31) relativ zum Rand (12) beweglich ist, so dass ein auf dem Rand (12) aufliegendes Substrat (40) einem Anpressdruck ausgesetzt werden kann, um die Fluidkammer zu verschließen,
**dadurch gekennzeichnet, dass**
- der Schließmechanismus (32) eine Wippenanordnung mit einer im Trägerkörper (20) verschwenkbar angeordneten Wippe (33) umfasst, an deren Enden verschwenkbare Verbindungselemente (34, 35) vorgesehen sind, die an verschiedenen Seiten der Fluidkammer (10) vorbeiführend verschwenkbar mit dem Klemmrahmen (31) verbunden sind, wobei an einem der Verbindungselemente (34) eine Feststellschraube (36) zum Festklemmen des Klemmrahmens (31) vorgesehen ist.

2. Vorrichtung gemäß Anspruch 1, bei der der umlaufende Rand (12) eine geglättete oder polierte Oberfläche aufweist.

3. Vorrichtung gemäß Anspruch 1 oder 2, bei der der umlaufende Rand (12) aus einem elastischen Dichtungsmaterial besteht.

4. Vorrichtung gemäß einem der vorhergehenden Ansprüche, bei der der Trägerkörper (20) eine um den Rand (12) der Fluidkammer (10) umlaufende erste Dichtung (22) aus unter Druck elastisch verformbarem Material aufweist.

5. Vorrichtung gemäß Anspruch 4, bei der die erste Dichtung (22) den Rand (12) um eine vorbestimmte Vorsprungshöhe überragt, so dass ein Rahmen gebildet wird, in den das Substrat (40) einlegbar ist.

6. Vorrichtung gemäß einem der vorhergehenden Ansprüche, bei der der Klemmrahmen (31) eine zweite Dichtung aus unter Druck elastisch verformbarem Material bildet.

7. Vorrichtung gemäß einem der vorhergehenden Ansprüche, bei der im Trägerkörper mindestens eine Temperierungseinrichtung vorgesehen ist.

8. Vorrichtung gemäß einem der vorhergehenden Ansprüche, bei der der Schließmechanismus (32) eine Geradeführungseinheit umfasst.

9. Vorrichtung gemäß einem der vorhergehenden Ansprüche, bei der der Klemmrahmen (31) ein Beobachtungsfenster (34) aufweist, durch das das Substrat (40) bzw. das Innere der Fluidkammer (10) der visuellen Beobachtung und/oder optischen Messungen zugänglich ist.

10. Vorrichtung gemäß einem der vorhergehenden Ansprüche, bei der die Auflage (13) des umlaufenden Randes (12) eine Fläche umgrenzt, deren Maße den Flächenmaßen von standardmäßig verwendeten Probenträgern oder Mikroskopiesubstraten entspricht.

11. Vorrichtung gemäß einem der vorhergehenden Ansprüche, bei der eine Rühreinrichtung zum Umwälzen von Flüssigkeiten in der Probenkammer vorgesehen ist.

12. Reaktionskammersystem, das eine Vielzahl von Vorrichtungen gemäß einem der vorhergehenden Ansprüche in reihenweiser oder matrixartiger Anordnung umfasst.

13. Verfahren zur Probenprozessierung mit einer Vorrichtung (100) gemäß einem der Ansprüche 1 bis 12, bei dem die Fluidkammer (10) mit einem Substrat (40), an das Proben gebunden sind, oder einer Platte mit der Feststelleinrichtung (30) verschlossen und anschließend mit Reaktionspartnern durch die Fluidanschlüsse (21) beschickt wird.

14. Verfahren nach Anspruch 13, bei dem das Substrat (40) oder die Platte mit dem Klemmrahmen (31) auf den umlaufenden Rand (12) der Fluidkammer (10) gedrückt wird, wobei das Andrücken des Klemmrahmens (31) mit einer Wippenanordnung (32) erfolgt, mit der das Substrat (40) oder die Platte vertikal auf den Rand (12) gedrückt wird.

15. Verfahren gemäß einem der Ansprüche 13 oder 14, bei dem ein Verschließen der Fluidkammer (10) durch Andrücken des Substrats (14) auf die Auflage (13) des umlaufenden Randes (12) erfolgt.

16. Verfahren gemäß einem der Ansprüche 13 bis 15, bei dem eine Temperierung der Fluidkammer (10) unter Verwendung mindestens einer Temperierungseinrichtung (25) im Trägerkörper (20) und/oder am Klemmrahmen (31) erfolgt.

17. Verfahren gemäß einem der Ansprüche 13 bis 16, bei dem nach der Reaktion eine Vermessung von Reaktionspartnern in der Fluidkammer (10) erfolgt, ohne dass diese geöffnet wird.

18. Verfahren gemäß einem der Ansprüche 13 bis 17, bei dem das Auflegen des Substrats (40) oder der Platte auf den Rand (12) der Fluidkammer (10) und das Verschließen der Fluidkammer (10) automatisch mit einem programmierten Steuersystem erfolgen.

19. Verwendung einer Vorrichtung oder eines Verfahrens gemäß einem der vorhergehenden Ansprüche
- zur Mikroprozessierung von Mikroarrays,
- für Hybridisierungsverfahren,
- zur Behandlung oder Bearbeitung des Substrats (40), oder
- zum Prozessieren von Proben mit µl-Volumen.

## Claims

1. Device (100) for processing substrate-fixed, dissolved and/or suspended samples, having a carrier body and having
- a fluid chamber (10), which has fluid connections (21) for connection to a metering device, a base (11) and a circumferential edge (12) which forms a support for a substrate (40), and is disposed in a carrier body (20) with fluid lines (23) connected to the fluid connections (21), and
- a fixing device (30) which is movable relative to the carrier body (20) and has a clamping frame (31), which clamping frame forms a contact surface (33) with an outer form corresponding to the shape of the circumferential edge (12), and having a closing mechanism (32) with which the clamping frame (31) is movable relative to the edge (12) so that a substrate (40) which is supported on the edge (12) can be subjected to a contact pressure in order to close the fluid chamber,
**characterised in that**
- the closing mechanism (32) comprises a rocker arrangement with a rocker (33) which is disposed pivotably in the carrier body (20), at the ends of which pivotable connection elements (34, 35) are provided which are connected pivotably to the clamping frame (31) leading past different sides of the fluid chamber (10), a fixing screw (36) for clamping the clamping frame (31) securely being provided on one of the connection elements (34).

2. Device according to claim 1, in which the circumferential edge (12) has a smoothed or polished surface.

3. Device according to claim 1 or 2, in which the circumferential edge (12) comprises an elastic sealing material.

4. Device according to one of the preceding claims, in which the carrier body (20) has a first seal (22) which extends around the edge (12) of the fluid chamber (10) and comprises material which is elastically deformable under pressure.

5. Device according to claim 4, in which the first seal (22) projects beyond the edge (12) by a predetermined projection height so that a frame is formed into which the substrate (40) can be placed.

6. Device according to one of the preceding claims, in which the clamping frame (31) forms a second seal comprising material which is elastically deformable under pressure.

7. Device according to one of the preceding claims, in which at least one temperature control device is provided in the carrier body.

8. Device according to one of the preceding claims, in which the closing mechanism (32) comprises a linear guide unit.

9. Device according to one of the preceding claims, in which the clamping frame (31) has an observation window (34) through which the substrate (40) or the interior of the fluid chamber (10) is accessible for visual observation and/or optical measurements.

10. Device according to one of the preceding claims, in which the support (13) of the circumferential edge (12) delimits a surface, the dimension of which corresponds to the surface dimensions of sample carriers or microscopy substrates which are used as standard.

11. Device according to one of the preceding claims, in which an agitation mechanism is provided for circulating liquids in the sample chamber.

12. Reaction chamber system which comprises a multiplicity of devices according to one of the preceding claims, in a serial or matrix-like arrangement.

13. Method for sample processing with a device (100), according to one of the claims 1 to 12, in which the fluid chamber (10) is closed with a substrate (40), on which samples are fixed, or with a plate by means of the fixing device (30) and subsequently is supplied with reaction partners through the fluid connections (21).

14. Method according to claim 13, in which the substrate (40) or the plate is pressed onto the circumferential edge (12) of the fluid chamber (10) by means of the clamping frame (31), the pressure of the clamping frame (31) being effected with a rocker arrangement (32) with which the substrate (40) or the plate is pressed vertically onto the edge (12).

15. Method according to one of the claims 13 or 14, in which closure of the fluid chamber (10) is effected by pressing the substrate (14) onto the support (13) of the circumferential edge (12).

16. Method according to one of the claims 13 to 15, in which temperature control of the fluid chamber (10) is effected using at least one temperature control mechanism (25) in the carrier body (20) and/or on the clamping frame (31).

17. Method according to one of the claims 13 to 16, in which measurement of reaction partners is effected in the fluid chamber (10) after the reaction without said fluid chamber being opened.

18. Method according to one of the claims 13 to 17, in which placing the substrate (40) or the plate on the edge (12) of the fluid chamber (10) and closure of the fluid chamber (10) are effected automatically with a programmed control system.

19. Use of a device or a method according to one of the preceding claims
- for microprocessing of microarrays,
- for hybridisation methods,
- for treating or processing the substrate (40), or
- for processing samples with µl volumes.

## Revendications

1. Dispositif (100) pour le traitement d'échantillons dissous et/ou en suspension liés à un substrat, avec un corps porteur et avec :
- une chambre de fluide (10) qui comporte des raccords de fluide (21) pour le raccordement à un dispositif de dosage, un fond (11) et un bord circulaire (12) qui forme un appui pour un substrat (40), et qui est disposée dans un corps porteur (20) avec des conduits de fluide (23) reliés au raccords de fluide (21), et
- un dispositif de blocage (30) déplaçable par rapport au corps porteur (20) avec un cadre de serrage (31) qui forme une surface de pression (33) avec une forme extérieure correspondant à la forme du bord circulaire (12), et avec un mécanisme de fermeture (32) au moyen duquel le cadre de serrage (31) est déplaçable par rapport au bord (12) de sorte qu'un substrat (40) posé sur le bord (12) peut être soumis à une force de serrage pour fermer la chambre de fluide,
**caractérisée en ce que**
- le mécanisme de fermeture (32) comprend un dispositif à bascule avec une bascule (33) disposée de manière pivotante dans le corps porteur (20) aux extrémités de laquelle sont prévus des éléments de liaison pivotants (34, 35) qui sont reliés au cadre de serrage (31) de manière pivotante en passant devant les différents côtés de la chambre de fluide (10), une vis de blocage (36) étant prévue sur l'un des éléments de liaison (34) pour le blocage du cadre de serrage (31).

2. Dispositif selon la revendication 1, dans lequel le bord circulaire (12) présente une surface lissée ou polie.

3. Dispositif selon la revendication 1 ou 2, dans lequel le bord circulaire (12) est constitué d'une matière d'étanchéité élastique.

4. Dispositif selon l'une quelconque des revendications précédentes, dans lequel le corps porteur (20) comporte une première garniture d'étanchéité circulaire (22) autour du bord (12) de la chambre de fluide (10) constituée d'une matière déformable élastiquement sous pression.

5. Dispositif selon la revendication 4, dans lequel la première garniture d'étanchéité (22) déborde au-dessus du bord (12) sur une hauteur en saillie prédéterminée, de sorte qu'un cadre est formé dans lequel le substrat (40) peut être logé.

6. Dispositif selon l'une quelconque des revendications précédentes, dans lequel le cadre de serrage (31) forme une seconde garniture d'étanchéité constituée d'une matière déformable élastiquement sous pression.

7. Dispositif selon l'une quelconque des revendications précédentes, dans lequel au moins un dispositif de climatisation est prévu dans le corps porteur.

8. Dispositif selon l'une quelconque des revendications précédentes, dans lequel le mécanisme de fermeture (32) comprend une unité de guidage rectiligne.

9. Dispositif selon l'une quelconque des revendications précédentes, dans lequel le cadre de serrage (31) comporte un hublot d'observation (34) à travers lequel le substrat (40) ou l'intérieur de la chambre de fluide (10) est accessible pour une observation visuelle et/ou optique.

10. Dispositif selon l'une quelconque des revendications précédentes, dans lequel l'appui (13) du bord circulaire (12) délimite une surface dont les dimensions correspondent aux dimensions de surface de porte-échantillons ou de substrats de microscopie utilisés de manière standard.

11. Dispositif selon l'une quelconque des revendications précédentes, dans lequel un dispositif agitateur est prévu pour le recyclage des liquides dans la chambre d'échantillonnage.

12. Système de chambres de réaction qui comprend une pluralité de dispositifs selon l'une quelconque des revendications précédentes agencés en rangées ou sous forme d'une matrice.

13. Procédé pour le traitement d'échantillons avec un dispositif (100) selon l'une quelconque des revendications 1 à 12, dans lequel la chambre de fluide (10) est obturée avec un substrat (40) auquel des échantillons sont liés ou avec une plaque avec le dispositif de blocage (30), puis chargée avec des partenaires réactionnels par les raccords de fluide (21).

14. Procédé selon la revendication 13, dans lequel le substrat (40) ou la plaque avec le cadre de serrage (31) est pressé sur le bord circulaire (12) de la chambre de fluide (10), la pression du cadre de serrage (31) se faisant avec un dispositif à bascule (32) avec lequel le substrat (40) ou la plaque est pressé verticalement sur le bord (12).

15. Procédé selon l'une quelconque des revendications 13 ou 14, dans lequel une fermeture de la chambre de fluide (10) est réalisée en pressant le substrat (14) sur l'appui (13) du bord circulaire (12).

16. Procédé selon l'une quelconque des revendications 13 à 15, dans lequel une climatisation de la chambre de fluide (10) est réalisée en utilisant au moins un dispositif de climatisation (25) dans le corps porteur (20) et/ou sur le cadre de serrage (31).

17. Procédé selon l'une quelconque des revendications 13 à 16, dans lequel une mesure des partenaires réactionnels est réalisée après la réaction dans la chambre de fluide (10) sans ouvrir celle-ci.

18. Procédé selon l'une quelconque des revendications 13 à 17, dans lequel la pose du substrat (40) ou de la plaque sur le bord (12) de la chambre de fluide (10) et la fermeture de la chambre de fluide (10) sont réalisées automatiquement avec un système de commande programmé.

19. Utilisation d'un dispositif ou d'un procédé selon l'une quelconque des revendications précédentes
- pour le micro-traitement de micro-puces,
- pour des procédés d'hybridation,
- pour le conditionnement ou l'usinage du substrat (40), ou
- pour le traitement d'échantillons avec des volumes en µl.
